# EUROPÄISCHE PATENTSCHRIFT

(11) **EP 2 712 117 B1**
(45) Veröffentlichungstag und Bekanntmachung des Hinweises auf die Patenterteilung: **16.11.2016**
(21) Anmeldenummer: 13184729.5
(22) Anmeldetag: 17.09.2013
(51) Int. Cl.: H04L 12/14, H04M 15/00

(54) **Verfahren zur Nutzung einer Kommunikationsverbindung und System zur Nutzung der Kommunikationsverbindung**
Method for using a communication connection and system for using the communication link
Procédé d'utilisation d'une liaison de communication et système d'utilisation de la liaison de communication

(30) Priorität: 24.09.2012 DE 102012108972
(43) Veröffentlichungstag der Anmeldung: 26.03.2014
(73) Patentinhaber: Vodafone GmbH, 40549 Düsseldorf (DE)
(72) Erfinder: Nakonetzki, André, 40699 Erkrath (DE); Joubert, Wilhelm, 40545 Düsseldorf (DE); Sowen, Nils, D-40217 Düsseldorf (DE)
(74) Vertreter: Müller & Schubert

(56) Entgegenhaltungen:
- WO-A1-2010/126465
- WO-A2-01/60045
- US-A1- 2008 014 904
- US-A1- 2010 104 076

## Beschreibung

Die vorliegende Erfindung betrifft ein Verfahren zur Nutzung einer Kommunikationsverbindung in einem Mobilfunknetz von mindestens einem Endgerät sowie ein System zur Nutzung einer Kommunikationsverbindung in einem Mobilfunknetzes.

Bei Mobilfunknetzen wird in der Regel eine Kommunikationsverbindung zwischen Endgeräten hergestellt, indem die von einem mobilen Endgerät angegebenen Informationen eines anderen mobilen Endgerätes in mindestens einer zentralen Verwaltungseinheit überprüft und entsprechende Verbindungen mit weiteren Komponenten, wie beispielsweise Basisstationen, hergestellt werden. Nach der Beendigung einer Kommunikationsverbindung werden die durch den verursachten Datenverkehr oder durch die Kommunikationsverbindung entstandenen Kosten in einem Konto, das dem Nutzer des mobilen Endgerätes zugeordnet ist, vermerkt. Bei einem so genannten Pre-paid Verfahren wird das Vermerken der Kosten in dem oder den Konten der Nutzer vor der Herstellung der Kommunikationsverbindung oder zumindest vor der Übermittlung von Datenverkehr oder der Ausführung von Diensten durchgeführt. Hierbei wird in der Regel überprüft, ob das auf dem Konto zur Verfügung stehende Guthaben für die angeforderte Kommunikationsverbindung, den angeforderten Datenverkehr und/oder den oder die angeforderten Dienste ausreichend ist.

Ein Nachteil bei diesen bekannten Verfahren besteht darin, dass die Nutzerinformationen, insbesondere das Guthaben der Nutzer auf dem Konto pauschal betrachtet wird und damit eine geringe Flexibilität bei der Nutzung einer Kommunikationsverbindung gegeben ist.

US 2008/0014904 A1 offenbart flexible Vergebührunqsreqeln in einem Real-Time Charging System (RCS). Das RCS generiert eine generische Einheit, die als Bucket bezeichnet wird. Der Bucket wird verwendet, um Konteninformationen zu verwalten und/oder um Arten der Benutzung zu zählen. Durch die Buckets kann der Netzwerkbetreiber Konten erstellen, um Nutzungszähler zu definieren und festzulegen, wie diese als Teil der Vergebührungsregeln verwendet werden. Hierbei kann einzelnen Buckets ein Kriterium, wie beispielsweise eine Gültigkeitsdauer zugeordnet sein. Für unterschiedliche Dienste können unterschiedliche Buckets eingerichtet werden. Ein Nachteil, der bei diesem Verfahren besteht, ist dass die Art der Nutzung des Kontos nicht flexibel eingerichtet werden kann.

Aufgabe der vorliegenden Erfindung ist es daher ein Verfahren und ein System zur Nutzung einer Kommunikationsverbindung in einem Mobilfunknetz bereitzustellen, bei dem Nutzerinformationen, insbesondere Berechtigungen des Benutzers zuverlässig und auf einfache Weise berücksichtigt werden können.

Der Erfindung liegt die Erkenntnis zugrunde, dass diese Aufgabe gelöst werden kann, indem Nutzerinformationen bei der Nutzung einer Kommunikationsverbindung nach unterschiedlichen Kriterien überprüft werden.

Gemäß einem ersten Aspekt betrifft die Erfindung daher Verfahren zur Nutzung einer Kommunikationsverbindung in einem Mobilfunknetzes von einem mobilen Endgerät, wobei in Zusammenhang mit der Nutzung der Kommunikationsverbindung eine zentrale Verwaltungsstelle zumindest eine Nutzerinformation überprüft. Das Verfahren ist dadurch gekennzeichnet, dass bei der Überprüfung der mindestens einen Nutzerinformation das oder die dem Nutzer zugeordneten Konten für Benutzungseinheiten überprüft wird, wobei in einem Grundkonto und einem Zusatzkonto für einen Nutzer Benutzungseinheiten verwaltet werden, die für das Grundkonto und das Zusatzkonto die gleiche Größe aufweisen, die eine nutzungsunabhängige Verwaltungsgröße darstellt, und bei Erkennen des Vorhandenseins eines Zusatzkontos zu einem Grundkonto für den Nutzer, zumindest eine Benutzungsbedingung für die Benutzung der Benutzungseinheiten des Zusatzkontos überprüft wird, wobei in dem Zusatzkonto jeder Benutzungseinheit mindestens eine Benutzungsbedingung zugeordnet ist und mindestens eine Benutzungsbedingung die Nutzungsart der Nutzung der Kommunikationsverbindung darstellt, und bei Erkennen des Erfüllens aller Benutzungsbedingungen für die Benutzung der Benutzungseinheiten des Zusatzkontos, die Nutzung der Kommunikationsverbindung zugelassen wird und eine der Nutzung entsprechende Anzahl von Benutzungseinheiten von dem Zusatzkonto abgezogen wird.

Als Nutzung einer Kommunikationsverbindung in einem Mobilfunknetz von einem mobilen Endgerät wird erfindungsgemäß die Übermittlung von Informationen über die Kommunikationsverbindung und/oder das Herstellen der Kommunikationsverbindung verstanden. Auch das Inanspruchnehmen von Diensten, die die Kommunkationsverbindung betreffen, wird als Nutzung der Kommunikationsverbindung verstanden.

Das mobile Endgerät stellt vorzugsweise ein Mobiltelefon dar. Als mobiles Endgerät kann aber auch ein anderes Kommunikationsgerät, wie beispielsweise ein Laptop, bezeichnet werden, sofern dieses Kommunikationsgerät zumindest zeitweise mit Kommunikationsmitteln zur Kommunikation über ein Mobilfunknetz ausgestattet ist.

Die zentrale Verwaltungsstelle dient erfindungsgemäß vorzugsweise zur Herstellung und Verwaltung einer Kommunikationsverbindung. Die zentrale Verwaltungsstelle kann hierzu mit weiteren Komponenten zur Nutzung der Kommunikationsverbindung, wie beispielsweise einer Datenbank für Nutzerinformationen verbunden sein. Die zentrale Verwaltungseinheit umfasst erfindungsgemäß oder ist erfindungsgemäß verbunden mit einer Abrechnungseinheit, in der die Nutzung der Kommunikationsverbindung abgerechnet wird.

Die Überprüfung der Nutzerinformationen, die erfindungsgemäß in Zusammenhang mit der Nutzung der Kommunikationsverbindung durchgeführt wird, wird vorzugsweise von der zentralen Verwaltungsstelle oder einer darin enthaltenen oder damit verbundenen Komponente, wie beispielsweise einer Abrechnungseinheit durchgeführt. In Zusammenhang mit der Nutzung der Kommunikationsverbindung bedeutet gemäß der Erfindung, dass die Überprüfung vor, während oder nach der Nutzung der Kommunikationsverbindung durchgeführt wird. Vorzugsweise wird die Überprüfung aber vor der Nutzung der Kommunikationsverbindung durchgeführt.

Als Nutzerinformation werden im Sinne der Erfindung nutzerspezifische Informationen, das heißt Informationen, die für einen Nutzer in dem Mobilfunknetz gespeichert sind und/oder für den Nutzer bei der Nutzung des Mobilfunknetzes angewendet oder zugrunde gelegt werden. Insbesondere stellten Nutzerinformationen nutzerspezifische Benutzungsbedingungen, insbesondere Benutzungsbedingungen für Benutzungseinheiten eines Nutzers, die Kontonummer oder die Kontonummern des Nutzers für das oder die Konten, die für den Nutzer beim dem Mobilfunkbetreiber, insbesondere in dem Mobilfunknetz geführt werden. Dieses oder diese Konten, werden auch als Subscriber-Konto oder Subscriber-Konten bezeichnet. Weiterhin wird auch der Kontostand, das heißt der Betrag der Benutzungseinheiten, die in einem Konto vermerkt, das heißt verfügbar sind, bezeichnet. Schließlich bezeichnen Nutzerinformationen gemäß der vorliegenden Erfindung auch Vertragsbedingungen, die in dem Vertrag zwischen dem Nutzer des Mobilfunknetzes und dem Mobilfunkbetreiber oder Mobilfunkanbieter getroffen wurden. Hierbei werden insbesondere Abrechungsbedingungen, wie beispielsweise ein Tarif, das heißt eine Regel zur Benutzung von Benutzungseinheiten als Nutzerinformation verstanden.

Erfindungsgemäß ist das Verfahren zur Nutzung der Kommunikationsverbindung dadurch gekennzeichnet, dass bei der Überprüfung der mindestens einen Nutzerinformation das oder die dem Nutzer zugeordneten Konten für Benutzungseinheiten überprüft wird, wobei in einem Grundkonto und einem Zusatzkonto für einen Nutzer Benutzungseinheiten verwaltet werden, die für das Grundkonto und das Zusatzkonto die gleiche Größe aufweisen.

Als Konto des Nutzers wird erfindungsgemäß eine Aufstellung von für den Nutzer zur Verfügung stehenden Benutzungseinheiten verstanden, wobei der oder den Benutzungseinheiten Kriterien, insbesondere Benutzungsbedingungen zugeordnet sein können.

Als Benutzungseinheit wird im Sinne der Erfindung eine nutzungsunabhängige Verwaltungsgröße bezeichnet, die auch als Unit bezeichnet werden kann. Vorzugsweise stellt die Benutzungseinheit eine Währungsgröße, beispielsweise Euro dar.

Als Grundkonto eines Nutzers wird in Sinne der Erfindung ein Konto bezeichnet, auf das der Nutzer im Rahmen des Kontostandes und seines Vertrages mit dem Mobilfunkanbieter frei verfügen kann. Hierbei können einzelne Nutzungsarten, insbesondere Dienste ausgeschlossen sein. Dieser Ausschluss erfolgt erfindungsgemäß allerdings nicht als Benutzungsbedingung sondern als Vertragsbedingung des Vertrages, der zwischen dem Mobilfunkanbieter und dem Nutzer geschlossen wurde und der in einer Kundendatenbank verwaltet wird. In dem Grundkonto selber sind daher vorzugsweise bezüglich der Benutzungsbedingungen keine Einträge enthalten. Sollten diesbezügliche Einträge vorhanden sein, so werden diese mit den Vertragsbedingungen aus der Kundendatenbank abgeglichen.

Als Zusatzkonto wird im Sinne der Erfindung ein Konto verstanden, dass nur im Rahmen der zumindest einem Teil des Zusatzkontos zugeordneten Benutzungsbedingungen und gegebenenfalls unter Berücksichtigung des Vertrages des Nutzers mit dem Mobilfunkanbieter nutzbar ist. Die Benutzungsbedingungen für die Benutzung der Benutzungseinheiten des Zusatzkontos sind vorzugsweise in dem Zusatzkonto vermerkt, das heißt mit diesen zusammen gespeichert.

Die Benutzungseinheiten, die in dem Zusatzkonto und dem Grundkonto verwaltet werden, weisen erfindungsgemäß die gleiche Größe auf. Dies bedeutet, dass sowohl die Benutzungseinheiten des Zusatzkontos als auch die Benutzungseinheiten des Grundkontos nutzungsunabhängige Verwaltungsgrößen darstellen und vorzugsweise eine Währungsgröße, beispielsweise Euro darstellen.

Erfindungsgemäß wird bei Erkennen des Vorhandenseins eines Zusatzkontos zu einem Grundkonto für den Nutzer, zumindest eine Benutzungsbedingung für die Benutzung der Benutzungseinheiten des Zusatzkontos überprüft. Dies bedeutet, dass bei Vorhandensein eines Zusatzkontos dieses bei der Bearbeitung zur Abrechnung einer Nutzung der Kommunikationsverbindung den Vorrang oder eine höhere Priorität besitzt. Das Einrichten eines Zusatzkontos wird vorzugsweise von dem Mobilfunkanbieter durchgeführt und kann durch den Nutzer nicht beeinflusst werden. Sobald ein Zusatzkonto eingerichtet ist, wird dieses bei der Überprüfung berücksichtigt, zunächst unabhängig davon, ob auf dem Konto Benutzungseinheiten gutgeschrieben, das heißt vermerkt oder gespeichert sind, oder nicht.

In dem Zusatzkonto ist jeder Benutzungseinheit mindestens eine Benutzungsbedingung zugeordnet. Das Erfüllen der Benutzungsbedingungen wird vorzugsweise stufenweise überprüft, wobei gegebenenfalls mehrere Benutzungseinheiten gemeinsam geprüft werden können.

Bei Erkennen des Erfüllens aller Benutzungsbedingungen für die Benutzung der Benutzungseinheiten des Zusatzkontos, wird die Nutzung der Kommunikationsverbindung zugelassen und eine der Nutzung entsprechende Anzahl von Benutzungseinheiten von dem Zusatzkonto abgezogen.

Als Abziehen der Benutzungseinheiten wird im Sinne der Erfindung auch ein Vermerken eines negativen Betrages in dem Zusatzkonto verstanden. Die der Nutzung entsprechende Anzahl von Benutzungseinheiten wird erfindungsgemäß als die Anzahl verstanden, die der aktuellen oder aktuell angefragten Nutzung der Kommunikationsverbindung entspricht. Als Nutzung der Kommunikationsverbindung wird beispielsweise das Verwenden einer oder mehrerer Nutzungsarten verstanden. Nutzungsarten können hierbei beispielsweise der Versand von SMS, MMS, die Übermittlung von Sprachdaten oder anderem Datenverkehr sowie die Nutzung von Diensten, insbesondere Diensten des Mobilfunkanbieters oder eines Drittanbieters sein.

Indem bei der vorliegenden Erfindung eine separate Behandlung von Benutzungseinheiten in einem Grundkonto und einem Zusatzkonto realisiert wird, können Nutzerinformationen, insbesondere Berechtigungen des Benutzers zuverlässig und auf einfache Weise und dennoch flexibel berücksichtigt werden können. Insbesondere kann eine Nutzung der Kommunikationsverbindung gezielt mit den Benutzungseinheiten eines der Konten des Nutzers abgeglichen werden. Beispielsweise kann der Mobilfunkbetreiber oder Anbieter dem Nutzer ein gewisses Guthaben an Benutzungseinheiten zur Verfügung stellen und der Nutzer kann dieses nutzen, ohne dass eine ungewollte oder nicht zugelassene Verwendung der Benutzungseinheiten seitens des Benutzers zu befürchten ist. Der Mobilfunkbetreiber oder Anbieter kann insbesondere bei dem Zusatzkonto stets die Verwendung der Benutzungseinheiten überwachen, einschränken oder gegebenenfalls nicht zulassen.

Im Gegensatz zu einem normalen Subscription-Konto oder Subscriber-Konto, bei dem der Mobilfunkanbieter beispielsweise dem Nutzer ein gewisses Kontingent an "freien SMS" einräumen kann, ist das erfindungsgemäße Verfahren wesentlich flexibler, da die Benutzungseinheiten, die in dem Zusatzkonto verwaltet werden den Benutzungseinheiten entsprechen, die in dem Grundkonto des Nutzers verwaltet werden. Somit ist auch ein Übergang von dem Zusatzkonto zu dem Grundkonto beispielsweise bei mangelndem Guthaben an geeigneten Benutzungseinheiten auf dem Zusatzkonto auf das Grundkonto möglich. Weiterhin ist es für den Nutzer vorteilhaft, dass die erfindungsgemäßen Benutzungseinheiten flexibler genutzt werden können. Beispielsweise kann der Nutzer wünschen statt einer MMS drei SMS zu senden. Dies wäre bei dem bekannten Kontingent, das dem Nutzer eingeräumt werden kann nicht möglich. Da es sich aber bei den erfindungsgemäß in dem Zusatzkonto verwendeten Benutzungseinheiten um nutzungsunabhängige Einheiten handelt, kann eine solche Verwendung der Benutzungseinheiten erfindungsgemäß erfolgen.

Gemäß einer Ausführungsform wird die der Nutzung entsprechende Anzahl von Benutzungseinheiten durch Abfrage von einer Datenbank ermittelt, auf der die Nutzerinformationen gespeichert sind. Für die Ermittlung der Anzahl der Benutzungseinheiten werden dabei vorzugsweise Regeln verwendet, die für den Nutzer in der Datenbank bezüglich des Grundkontos hinterlegt sind.

Die Nutzerinformationen, die auf der Datenbank gespeichert sind, umfassen insbesondere die Vertragsbedingungen des Vertrages zwischen dem Nutzer und dem Mobilfunkanbieter. In diesen Nutzerinformationen sind insbesondere Regeln für die Benutzung der Benutzungseinheiten des Grundkontos des Nutzers hinterlegt. Diese Regeln werden auch als Tarif bezeichnet. In den Regeln kann zum einen festgelegt sein, welche Nutzungsarten mit den Benutzungseinheiten abgegolten, das heißt bezahlt werden können. Zum anderen ist aber vorzugsweise festgelegt, wie viele Benutzungseinheiten für eine einzige Nutzung einer Nutzungsart berechnet werden, das heißt von dem Konto abgezogen werden.

Indem diese Regeln bei der Verrechnung der Benutzungseinheiten des Zusatzkontos berücksichtigt werden, kann die Verwendung der Benutzungseinheiten des Zusatzkontos noch flexibler ausgeführt werden. Zudem wird dem Nutzer für die Nutzung unter Verwendung der Benutzungseinheiten des Zusatzkontos bei dieser Ausführungsform die gleiche Anzahl an Benutzungseinheiten in Rechnung gestellt, das heißt abgezogen, wie dies der Fall wäre, wenn die Benutzungseinheiten von dem Grundkonto abgezogen würden.

Gemäß einer weiteren Ausführungsform wird bei Erkennen der Nichterfüllung mindestens einer der Benutzungsbedingungen für die Benutzung der Benutzungseinheiten des Zusatzkontos, eine Überprüfung der Erfüllung der Benutzungsbedingungen für die Benutzung der Benutzungseinheiten des Grundkontos überprüft, wobei die Benutzungsbedingungen für die Benutzung der Benutzungseinheiten des Grundkontos vorzugsweise in einer Datenbank mit Nutzerinformationen für den Nutzer gespeichert sind und von dieser abgefragt werden.

Durch das Übergehen von dem Zusatzkonto auf das Grundkonto bei Nichterfüllung mindestens einer der Benutzungsbedingungen, kann die Flexibilität weiter erhöht werden.

Als Benutzungsbedingungen werden im Sinne der Erfindung insbesondere Bedingungen die zur Benutzung der Benutzungseinheiten der Konten gegeben sein müssen bezeichnet. Diese werden vorzugsweise vor der Benutzung der Benutzungseinheiten überprüft.

Als Benutzungsbedingungen werden im Sinne der Erfindung insbesondere eine Vorgabe mindestens einer zugelassenen oder mindestens einer nicht zugelassenen Nutzungsarten der Kommunikationsverbindung, eine Gültigkeit der Benutzungseinheiten, die insbesondere eine zeitliche Gültigkeit darstellen kann, sowie ein ausreichendes Guthaben, das heißt eine ausreichende Menge oder Anzahl an Benutzungseinheiten auf dem Konto, beispielsweise dem Zusatzkonto bezeichnet. Auch die Möglichkeit des Transferierens der Benutzungseinheiten auf ein anderes Konto und ein Auszahlen der Benutzungseinheiten an den Nutzer beziehungsweise ein Verbot dieser Möglichkeiten wird als Benutzungsbedingung bezeichnet.

Gemäß der Ausführungsform, bei der ein Übergang von dem Zusatzkonto auf das Grundkonto vorgesehen ist, kann beispielsweise bei einer nicht ausreichenden Anzahl von Benutzungseinheiten auf dem Zusatzkonto für eine angefragte Nutzung auf die Benutzungseinheiten auf dem Grundkonto zurückgegriffen werden.

Gemäß einer Ausführungsform erfolgt das Überprüfen des Erfüllens der Benutzungsbedingungen für die Benutzung der Benutzungseinheiten des Zusatzkontos durch Vergleich mit Einträgen in dem Zusatzkonto.

In dem Zusatzkonto sind erfindungsgemäß vorzugweise außer der Anzahl der Benutzungseinheiten Benutzungsbedingungen für die Benutzungseinheiten als Einträge hinterlegt. Diese können beispielsweise die Nutzungsarten für die die Benutzungseinheiten des Zusatzkontos verwendet werden dürfen sein. Weiterhin kann eine Gültigkeitsdauer oder ein Enddatum der Gültigkeit mindestens einer Benutzungseinheit in dem Zusatzkonto hinterlegt sein. Durch Vergleich mit diesen Einträgen in dem Zusatzkonto kann zuverlässig entschieden werden, ob die Benutzungseinheiten für die derzeit angefragte Nutzung zum derzeitigen Zeitpunkt verwendet werden können.

Vorzugsweise stellen die Benutzungsbedingungen gemäß der vorliegenden Erfindung die Nutzungsart der Nutzung der Kommunikationsverbindung und/oder Zeitbedingungen und/oder eine Mindestmenge von Benutzungseinheiten in dem Zusatzkonto oder dem Grundkonto dar.

Hierdurch kann zum einen die die Art der Nutzung der Kommunikationsverbindung, die Dauer der Nutzung oder der Möglichkeit der Nutzung der Kommunikationsverbindung und gegebenenfalls zum anderen der Kontostand des oder der Konten des Nutzers überwacht werden.

Das Überprüfen des Erfüllens der Benutzungsbedingungen der Benutzungsbedingungen für die Benutzung der Benutzungseinheiten des

Zusatzkontos und/oder des Grundkontos erfolgen gemäß einer Ausführungsform durch das Überprüfen des Überschreitens eines Schwellwertes. Der Schwellwert kann hierbei beispielsweise eine Gültigkeitsdauer oder einen Mindestbetrag von Benutzungseinheiten darstellen. Dieser Schwellwert kann mit der aktuellen Zeit oder der für die angefragte Nutzung der Kommunikationsverbindung anfallenden Benutzungseinheiten verglichen werden.

Gemäß einer Ausführungsform ist das Zusatzkonto in Gruppen von Benutzungseinheiten eingeteilt und jeder Gruppe ist mindestens eine Benutzungsbedingung zugeordnet.

Als Gruppe von Benutzungseinheiten, die auch als Voucher bezeichnet werden kann, werden hierbei Benutzungseinheiten bezeichnet, denen dieselbe oder dieselben Benutzungsbedingungen zugeordnet sind. Beispielsweise kann einer Gruppe von 10 Benutzungseinheiten entsprechend 10 Euro die Benutzungsbedingungen zugeordnet sein, dass diese nur für SMS und MMS verwendet werden dürfen und dass deren Gültigkeit am Ende des Monats abläuft. Sind Gruppen von Benutzungseinheiten vorgesehen, so werden bei der Beurteilung der verfügbaren Anzahl von Benutzungseinheiten ausschließlich die Benutzungseinheiten dieser Gruppe oder einer anderen Gruppe mit identischen Benutzungsbedingungen, insbesondere identischen zugelassenen oder ausgeschlossenen Nutzungsarten berücksichtigt.

Der Vorteil des Zusammenfassens von Benutzungseinheiten in Gruppen besteht in der Vereinfachung der Verwaltung der Benutzungseinheiten. Zudem können solche Gruppen zusammen von dem Mobilfunkanbieter oder Betreiber an den Nutzer vergeben werden.

Gemäß einer Ausführungsform wird bei Erkennen der Nichterfüllung mindestens einer Benutzungsbedingung einer ersten Gruppe der Benutzungseinheiten des Zusatzkontos das Vorhandensein und das Erfüllen der Benutzungsbedingungen einer zweiten Gruppe des Zusatzkontos überprüft, bevor eine Überprüfung der Erfüllung der Benutzungsbedingungen für die Benutzung der Benutzungseinheiten des Grundkontos erfolgt. Durch diese Reihenfolge kann eine Priorität in der Verwendung der Benutzungseinheiten geschaffen werden. Zudem kann sichergestellt werden, dass zunächst sämtliche verfügbaren Benutzungseinheiten und für die jeweilige Nutzungsarten zugelassenen Benutzungseinheiten des Zusatzkontos verwendet werden, bevor auf die Benutzungseinheiten des Grundkontos zurückgegriffen wird.

Gemäß einer Ausführungsform ist eine der Benutzungsbedingungen der Benutzungseinheiten des Zusatzkontos, dass die Benutzungseinheiten nicht auf das Grundkonto übertragen werden können. Durch das Vorsehen dieser Benutzungsbedingung kann ein Missbrauch von Benutzungseinheiten, die der Mobilfunkanbieter oder Betreiber dem Nutzer eingeräumt hat, verhindert werden. Insbesondere kann bei einer Anzahl von Benutzungseinheiten, die zu Werbezwecken vergeben wurden, verhindert werden, dass der Nutzer diese auf das Grundkonto überträgt und sich von dort ausbezahlen beziehungsweise erstatten lässt.

Gemäß einer Ausführungsform umfasst das erfindungsgemäße Verfahren zumindest die folgenden Schritte:
- Überprüfen des Vorhandenseins eines Zusatzkontos zu einem Grundkonto für den Nutzer, der die Nutzung anfragt,
- Überprüfung der Benutzungsbedingung der Nutzungsart für das Zusatzkonto,
- Abfrage der Regeln für den Nutzer für das Grundkonto von einer Datenbank in der Nutzerinformationen gespeichert sind,
- Überprüfung der Anzahl der Benutzungseinheiten auf dem Zusatzkonto und Vergleich mit der nach den Regeln für den Nutzer für das Grundkonto erforderlichen Benutzungseinheiten erforderlichen Benutzungseinheiten für die angefragte Nutzung der Kommunikationsverbindung, und
- Überprüfung der zeitlichen Benutzungsbedingungen der Benutzungseinheiten des Zusatzkontos und Vergleich mit den aktuellen zeitlichen Bedingungen.

Die vorgenannten Schritte können auch in einer anderen Reihenfolge ausgeführt werden. Vorzugsweise werden die Schritte durchgeführt, bevor die angefragte Nutzung freigegeben wird. Als angefragte Nutzung wird eine Nutzung der Kommunikationsverbindung verstanden, die von einem Nutzer beauftragt oder bestellt wird. Die Beauftragung oder Bestellung kann beispielsweise der Auftrag zum Senden einer Nachricht, beispielsweise SMS oder MMS oder die Anfrage zum Aufbau einer Kommunikationsverbindung oder die Bestellung eines Dienstes darstellen.

Werden die erfindungsgemäß vorgesehenen Überprüfungen positiv abgeschlossen, so wird erfindungsgemäß die Nutzung zugelassen und vorzugsweise von dem Zusatzkonto oder gegebenenfalls dem Grundkonto abgebucht, das heißt die angefallenen Benutzungseinheiten abgezogen.

Gemäß einem weitern Aspekt betrifft die Erfindung ein System zur Nutzung einer Kommunikationsverbindung in einem Mobilfunknetzes von einem mobilen Endgerät, das zumindest eine zentrale Verwaltungsstelle und zumindest ein mobiles Endgerät aufweist. Das System ist dadurch gekennzeichnet, dass das System zur Durchführung eines erfindungsgemäßen Verfahrens ausgelegt ist.

Vorteile und Merkmale, die bezüglich des erfindungsgemäßen Verfahren beschrieben werden, gelten - soweit anwendbar- entsprechend für das erfindungsgemäße System und umgekehrt.

Gemäß einer Ausführungsform weist das System zumindest eine Speichereinheit mit zumindest einem Speichermittel für zumindest ein Grundkonto und zumindest einem Speichermittel für zumindest ein Zusatzkonto eines Nutzers des Mobilfunknetzes und zumindest eine Datenbank für Nutzerinformationen des Nutzers des Mobilfunknetzes auf und das Speichermittel für das zumindest eine Zusatzkonto weist eine Schnittstelle mit der Datenbank auf.

Die Speichermittel können als Teile einer Software beispielsweise als Tabellen vorgesehen sein.

Indem das Speichermittel für das zumindest eine Zusatzkonto eine Schnittstelle mit der Datenbank, die insbesondere eine Kundendatenbank aufweist, können Nutzerinformationen, insbesondere Tarifinformationen von dem Zusatzkonto abgefragt werden und für die Abbuchung oder den Abzug von Benutzungseinheiten verwendet werden.

Erfindungsgemäß ist es aber auch möglich, dass die Tarifinformationen nicht unmittelbar von dem Zusatzkonto abgefragt werden sondern von einer Abrechnungseinheit, die beispielsweise einen Teil der zentralen Verwaltungsstelle darstellen kann.

Gemäß einer Ausführungsform weist das Speichermittel für zumindest ein Zusatzkonto eine Schnittstelle zu dem Speichermittel für das zumindest eine Grundkonto auf. Hierdurch wird ein Austausch von Informationen zwischen dem Zusatzkonto und dem Grundkonto ermöglicht. Vorzugsweise ist die Schnittstelle unidirektional, das heißt dass nur Informationen von dem Zusatzkonto zu dem Grundkonto aber nicht umgekehrt übertragen werden können. Hierdurch kann beispielsweise ein Zurückgreifen auf das Grundkonto bei mangelnder Deckung des Zuatzkontos ermöglicht werden.

Die Erfindung wird im Folgenden erneut unter Bezugnahme auf die beiliegenden Zeichnungen beschrieben. Es zeigen:
Figur 1: einen schematischen Aufbau einer Ausführungsform des erfindungsgemäßen Verfahrens; und
Figur 2: einen schematischen Verfahrensablauf einiger Schritte einer Ausführungsform des erfindungsgemäßen Verfahrens.

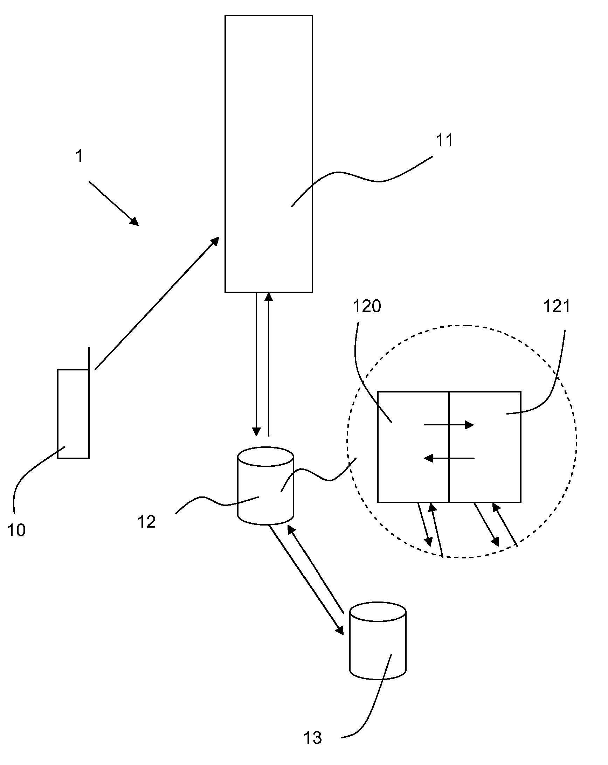

In Figur 1 sind die für die Erfindung wesentlichen Komponenten eines Systems 1 für die Nutzung einer Kommunikationsverbindung in einem Mobilfunknetz gezeigt. Insbesondere ist ein mobiles Endgerät 10 in Form eines Mobiltelefons gezeigt. Weiterhin umfasst das System 1 eine zentrale Verwaltungsstelle 11. Das mobile Endgerät 10 kommuniziert mit der zentralen Verwaltungsstelle 11. Insbesondere wird über die zentrale Verwaltungsstelle 11 eine Kommunikationsverbindung mit anderen mobilen Endgeräten (nicht gezeigt) hergestellt und/oder ein Verkehr über eine bestehende Kommunikationsverbindung geleitet und/oder ein oder mehrere Dienste für das mobile Endgerät 10 zur Verfügung gestellt. Die zentrale Verwaltungsstelle 11 ist mit einer Speichereinheit 12 verbunden. Diese Verbindung kann permanent sein oder bei Bedarf hergestellt werden und dient insbesondere der Übermittlung der Information ob eine Nutzung einer Kommunikationsverbindung von dem mobilen Endgerät 10 aus erfolgen kann.

In der Speichereinheit 12 sind zwei Speichermittel 120 und 121 vorgesehen. Diese können auch zusammengefasst sein. In dem Speichermittel 120 sind Angaben zu dem Grundkonto eines Nutzers, in der dargestellten Ausführungsform des Nutzers des mobilen Endgerätes 10, und in dem Speichermittel 121 sind Angaben zu dem Zusatzkonto eines Nutzers, in der dargestellten Ausführungsform des Nutzers des mobilen Endgerätes 10, gespeichert.

Die Speichereinheit 12 ist mit einer Datenbank 13, die eine Kundendatenbank des Mobilfunkbetreibers oder Anbieters darstellt, verbunden. Über die Verbindung mit der Datenbank 13 können insbesondere Informationen über Tarife für den Nutzer des mobilen Endgerätes 10 ausgetauscht werden.

Es versteht sich, dass weitere Komponenten und Verbindungen in dem System 1 vorgesehen sein können. Beispielsweise kann die zentrale Verwaltungsstelle auch direkt mit der Datenbank 13 verbunden sein, um beispielsweise Nutzerinformationen, wie die Kontonummer eines Nutzers, insbesondere des Nutzers des mobilen Endgerätes 10 zu ermitteln und dementsprechend mit der entsprechenden Speichereinheit 12 oder einem entsprechenden Speichermittel 120, 121 eine Verbindung herzustellen. Zudem es erfindungsgemäß möglich, dass die Speichereinheit 12 auch mehrere Speichermittel 120, 121 für mehrere Nutzer des Mobilfunknetzes aufweisen kann.

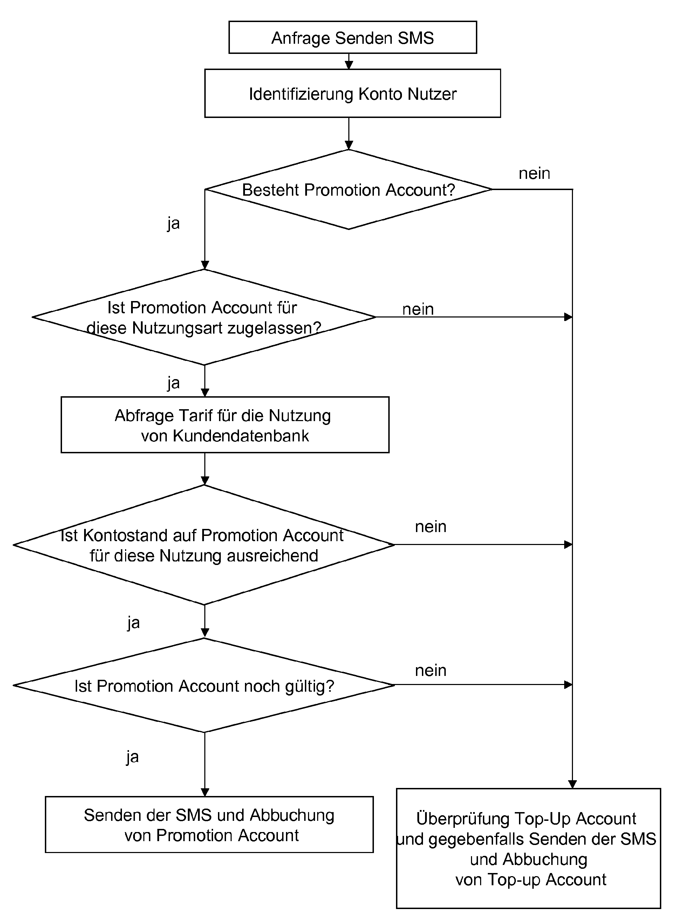

In Figur 2 ist eine schematische Darstellung einiger Schritte einer Ausführungsform des erfindungsgemäßen Verfahrens schematisch gezeigt.

In einem ersten Schritt wird eine Anfrage zur Nutzung einer Kommunikationsverbindung, beispielsweise eine Anfrage zum Senden einer SMS von einem mobilen Endgerät, beispielsweise dem Endgerät 10 empfangen. Diese Anfrage wird beispielsweise an der zentralen Verwaltungsstelle 11 empfangen. Aufgrund dieser Anfrage wird das dem Nutzer des anfragenden Endgerätes zugeordnete Konto, das auch als Subscription- oder Subcriber-Konto bezeichnet werden kann, ermittelt.

In einem nächsten Schritt oder gleichzeitig wird ermittelt, ob dem Nutzer ein Zusatzkonto, das auch als Promotion Account bezeichnet wird, zu einem Grundkonto zugeordnet ist. Ist dies nicht der Fall, wird die weitere Bearbeitung der Anfrage über das Grundkonto des Nutzers abgewickelt. Ist hingegen ein Zusatzkonto zu dem Grundkonto vorhanden, so erfolgt eine Abfrage, ob das Zusatzkonto für die angefragte Nutzungsart zugelassen ist, das heißt ob die Benutzungseinheiten des Zusatzkontos für diese Nutzungsart zugelassen ist. Somit erfolgt in diesem Schritt eine erste Überprüfung der Erfüllung vorgegebener Benutzungsbedingungen, in diesem Fall der zugelassenen Nutzungsart. Diese Überprüfung kann an der zentralen Verwaltungsstelle 11 oder an einem anderen Ort in dem System 1 erfolgen. In jedem Fall werden aber vorzugsweise Einträge des Zusatzkontos zu diesem Zweck ausgelesen. Insbesondere werden vorzugsweise die für die Verwendung der Benutzungseinheiten zugelassenen Nutzungsarten aus dem Zusatzkonto ausgelesen. Stellt sich bei der Überprüfung, insbesondere dem Vergleich zwischen der angefragten Nutzungsart und der ausgelesenen zugelassenen Nutzungsart heraus, dass die Benutzungseinheiten des Zusatzkontos für diese Nutzungsart nicht zugelassen sind, so erfolgt eine weitere Bearbeitung der Anfrage über das Grundkonto des Nutzers.

Ist die Nutzungsart jedoch bei dem Zusatzkonto des Nutzers zugelassen, so erfolgt eine Abfrage weiterer Nutzerinformationen vorzugsweise von einer Datenbank 13, die Kundendaten enthält. Bei dieser Abfrage wird insbesondere ermittelt, welcher Tarif für die angefragte Nutzung anzuwenden ist. Hierbei werden die Einträge aus der Datenbank 13, insbesondere einer Kundendatenbank verwendet, die den Tarif angeben, der für eine normale Behandlung der Anfrage über das Grundkonto verwendet werden würde. Dieser Tarif entspricht daher einer Regel für die Verwendung von Benutzungseinheiten des Grundkontos, die normalerweise in dem Vertrag zwischen einem Mobilfunkanbieter oder Betreiber und dem Nutzer enthalten ist.

Der Tarif, der für die Abrechung der angefragten Nutzung, verwendet werden soll, gibt in der Regel eine Anzahl von Benutzungseinheiten an, die von dem Konto abgezogen oder abgebucht werden sollen.

Mit der so erhaltenen Information über die Anzahl der abzubuchenden oder abzuziehenden Benutzungseinheiten wird in einem weiteren Schritt des Verfahrens der Kontostand des Zusatzkontos überprüft. Insbesondere wird überprüft, ob der Kontostand ausreichend ist, um die für die angefragte Nutzung fällig werdenden Benutzungseinheiten abzudecken.

Ist das Zusatzkonto in Gruppen unterteilt, kann in diesem Schritt überprüft werden, ob eine der Gruppen des Zusatzkontos eine ausreichende Anzahl von Benutzungseinheiten aufweist, um die für die angeforderte Nutzung fälligen Benutzungseinheiten abzudecken.

Ist der Kontostand des Zusatzkontos oder aller Gruppen des Zusatzkontos nicht ausreichend, um die für die angeforderte Nutzung fälligen Benutzungseinheiten abzudecken, so erfolgt eine weitere Bearbeitung der Anfrage über das Grundkonto des Nutzers. Ist hingegen der Kontostand ausreichend, so wird in einem weiteren Schritt überprüft, ob die Benutzungseinheiten noch gültig sind. Dabei wird beispielsweise ermittelt, ob die Gültigkeitsdauer der Benutzungseinheiten, insbesondere der für die Nutzungsart zugelassenen Benutzungseinheiten, überschritten wurde. Ist dies der Fall, so erfolgt eine weitere Bearbeitung der Anfrage über das Grundkonto des Nutzers. Sind die für die angeforderte Nutzung notwendigen Benutzungseinheiten hingegen noch gültig, so wird die angeforderte Nutzung ausgeführt, und die angefallenen Benutzungseinheiten werden von dem Zusatzkonto abgebucht oder abgezogen.

Es versteht sich, dass die in der Figur 2 gezeigten Schritte auch in einer anderen Reihenfolge durchgeführt werden können. Beispielsweise kann Überprüfung der Zulässigkeit der Nutzungsart für das Zusatzkonto bereits überprüft werden, ob die in dem Zusatzkonto enthaltenen Benutzungseinheiten noch gültig sind.

In dieser Hinsicht ist allerdings die gezeigte Reihenfolge bevorzugt, da hierbei auch berücksichtigt werden kann dass gegebenenfalls einzelne oder Gruppen von Benutzungseinheiten für eine Nutzungsart eventuell unterschiedliche Gültigkeitsdaten haben können.

Mit der vorliegenden Erfindung wird es möglich, ein Konto einzurichten, das es ermöglicht, den Kontostand betreffend Werbeaktionen oder anderer Aktionen von dem Kontostand, der durch Auffüllen des Kontos seitens des Nutzers erfolgt zu unterscheiden. Das erste Konto wird auch als Zusatzkonto oder "Promotion"-Account und das zweite Konto oder Grundkonto als "Topp-up"-Account bezeichnet.

In dem Promotion-Account wird beispielsweise eine flexible Menge an Benutzungseinheiten, z.B. in Euro, das heißt beispielsweise 1€ für Nutzer A und 2€ für Nutzer B gebucht, wobei diese Menge eine flexible Gültigkeit aufweisen kann. Beispielsweise kann diese für eine Woche oder bis ans Ende des Monats gültig sein. Nach dem Ablaufdatum wird der Bonus-Kredit, das heißt die Menge der Benutzungseinheiten auf dem Promotion-Account automatisch gelöscht.

Für die Konten, Zusatzkonto und/oder Grundkonto, gelten vorzugsweise die folgenden Variablen:
- Eine bestimmte Gültigkeit wird definiert. Für den Anfangskontostand des Zusatzkontos, der auch als Initial Balance bezeichnet werden kann, kann beispielsweise festgelegt werden, dass wenn innerhalb von 3 Monaten keine Benutzung stattfindet, dieser auf 0€ zurückgesetzt wird. Für den Promotion-Kontostand, das heißt dem Kontostand des Zusatzkontos, der über den Anfangskontostand hinaus auf dem Zusatzkonto zur Verfügung steht und der auch als Bonuskredit bezeichnet werden kann, kann beispielsweise festgelegt werden, dass der Bonuskredit für die nächsten zwei Tage oder bis zum Ende des Monats gültig ist.
- Der Kredit oder das Konto auf den Konten und insbesondere auf dem Zusatzkonto kann verwendet werden für beispielsweise: nationale Standard SMS/MMS/Sprach/Daten-Transfer sowie Roaming, internationale Dienste und Dienste (beispielsweise mit der Option einer monatlichen Rate)
- Die Priorität der Abrechnung, das heißt der Verwendung der Benutzungseinheiten des Grundkontos und des Zusatzkontos kann wie folgt festgelegt werden: 1. Promotion-Kontostand (Zusatzkonto), 2: AnfangsKontostand (Zusatzkonto), 3: Top-up Balance Konto (Grundkonto)
- Der Kontostand des Zusatzkontos, sowohl Promotion-Kontostand als auch Anfangskontostand, kann nicht ausbezahlt werden
- Der Kontostand des Zusatzkontos, sowohl Promotion-Kontostand als auch Anfangskontostand, kann nicht transferiert werden, beispielsweise durch Geldtransfer oder durch Kundenbetreuung

Mit der vorliegenden Erfindung können eine Reihe von Vorteile erzielt werden. Insbesondere kann das Zusatzkonto für eine persönliche Preisfestsetzung verwendet werden.

### Bezugszeichenliste

- 1: System
- 10: mobiles Endgerät
- 11: zentrale Verwaltungsstelle
- 12: Speichereinheit
- 120: Speichermittel für Grundkonto
- 121: Speichermittel für Zusatzkonto
- 13: Datenbank für Nutzerinformationen (Kundendatenbank)

## Patentansprüche

1. Verfahren zur Nutzung einer Kommunikationsverbindung in einem Mobilfunknetzes von einem mobilen Endgerät (10). wobei in Zusammenhang mit der Nutzung der Kommunikationsverbindung eine zentrale Verwaltungsstelle (11) zumindest eine Nutzerinformation überprüft, **dadurch gekennzeichnet, dass** bei der Überprüfung der mindestens einen Nutzerinformation das oder die dem Nutzer zugeordneten Konten für Benutzungseinheiten überprüft wird, wobei in einem Grundkonto und einem Zusatzkonto für einen Nutzer Benutzungseinheiten verwaltet werden, die für das Grundkonto und das Zusatzkonto die gleiche Größe aufweisen, die eine nutzungsunabhängige Verwaltungsgröße darstellt, und bei Erkennen des Vorhandenseins eines Zusatzkontos zu einem Grundkonto für den Nutzer, zumindest eine Benutzungsbedingung für die Benutzung der Benutzungseinheiten des Zusatzkontos überprüft wird, wobei in dem Zusatzkonto jeder Benutzungseinheit mindestens eine Benutzungsbedingung zugeordnet ist und mindestens eine Benutzungsbedingung die Nutzungsart der Nutzung der Kommunikationsverbindung darstellt, und bei Erkennen des Erfüllens aller Benutzungsbedingungen für die Benutzung der Benutzungseinheiten des Zusatzkontos, die Nutzung der Kommunikationsverbindung zugelassen wird und eine der Nutzung entsprechende Anzahl von Benutzungseinheiten von dem Zusatzkonto abgezogen wird.

2. Verfahren nach Anspruch 1, **dadurch gekennzeichnet, dass** die der Nutzung entsprechende Anzahl von Benutzungseinheiten durch Abfrage von einer Datenbank (13) ermittelt wird, auf der Nutzerinformationen gespeichert sind und für die Ermittlung der Anzahl der Benutzungseinheiten Regeln verwendet werden, die für den Nutzer in der Datenbank (13) bezüglich des Grundkontos hinterlegt sind.

3. Verfahren nach einem der Ansprüche 1 oder 2, **dadurch gekennzeichnet, dass** bei Erkennen der Nichterfüllung mindestens einer der Benutzungsbedingungen für die Benutzung der Benutzungseinheiten des Zusatzkontos, eine Überprüfung der Erfüllung der Benutzungsbedingungen für die Benutzung der Benutzungseinheiten des Grundkontos durchgeführt wird, wobei die Benutzungsbedingungen für die Benutzung der Benutzungseinheiten des Grundkontos vorzugsweise in einer Datenbank (13) mit Nutzerinformationen für den Nutzer gespeichert sind und von dieser abgefragt werden.

4. Verfahren nach einem der Ansprüche 1 bis 3, **dadurch gekennzeichnet, dass** das Überprüfen des Erfüllens der Benutzungsbedingungen für die Benutzung der Benutzungseinheiten des Zusatzkontos durch Vergleich mit Einträgen in dem Zusatzkonto erfolgt.

5. Verfahren nach einem der Ansprüche 1 bis 4, **dadurch gekennzeichnet, dass** die Benutzungsbedingungen Zeitbedingungen und/oder eine Mindestmenge von Benutzungseinheiten in dem Zusatzkonto oder dem Grundkonto darstellen.

6. Verfahren nach einem der Ansprüche 4 oder 5, **dadurch gekennzeichnet, dass** das Überprüfen des Erfüllens der Benutzungsbedingungen durch das Überprüfen des Überschreitens eines Schwellwertes erfolgt.

7. Verfahren nach einem der Ansprüche 1 bis 6, **dadurch gekennzeichnet, dass** das Zusatzkonto in Gruppen von Benutzungseinheiten eingeteilt ist und jeder Gruppe mindestens eine Benutzungsbedingung zugeordnet ist.

8. Verfahren nach Anspruch 7, **dadurch gekennzeichnet, dass** bei Erkennen der Nichterfüllung mindestens einer Benutzungsbedingung einer ersten Gruppe der Benutzungseinheiten des Zusatzkontos das Vorhandensein und das Erfüllen der Benutzungsbedingungen einer zweiten Gruppe des Zusatzkontos überprüft wird, bevor eine Überprüfung der Erfüllung der Benutzungsbedingungen für die Benutzung der Benutzungseinheiten des Grundkontos erfolgt.

9. Verfahren nach einem der Ansprüche 1 bis 8, **dadurch gekennzeichnet, dass** eine der Benutzungsbedingungen der Benutzungseinheiten des Zusatzkontos ist, dass die Benutzungseinheiten nicht auf das Grundkonto übertragen werden können.

10. Verfahren nach einem der Ansprüche 1 bis 9, **dadurch gekennzeichnet, dass** dieses zumindest die folgenden Schritte umfasst:
- Überprüfen des Vorhandenseins eines Zusatzkontos zu einem Grundkonto für den Nutzer, der die Nutzung anfragt,
- Überprüfung der Benutzungsbedingung der Nutzungsart für das Zusatzkonto,
- Abfrage der Regeln für den Nutzer für das Grundkonto von einer Datenbank in der Nutzerinformationen gespeichert sind,
- Überprüfung der Anzahl der Benutzungseinheiten auf dem Zusatzkonto und Vergleich mit der nach den Regeln für den Nutzer für das Grundkonto erforderlichen Benutzungseinheiten erforderlichen Benutzungseinheiten für die angefragte Nutzung der Kommunikationsverbindung, und
- Überprüfung der zeitlichen Benutzungsbedingungen der Benutzungseinheiten des Zusatzkontos und Vergleich mit den aktuellen zeitlichen Bedingungen.

11. System zur Nutzung einer Kommunikationsverbindung in einem Mobilfunknetzes von einem mobilen Endgerät (10), das zumindest eine zentrale Verwaltungsstelle (11) und zumindest ein mobiles Endgerät (10) umfasst, **dadurch gekennzeichnet, dass** das System zur Durchführung eines Verfahrens nach einem der Ansprüche 1 bis 10 ausgelegt ist.

12. System nach Anspruch 11, **dadurch gekennzeichnet, dass** das System zumindest eine Speichereinheit (12) mit zumindest einem Speichermittel (120) für zumindest ein Grundkonto und zumindest einem Speichermittel (121) für zumindest ein Zusatzkonto eines Nutzers des Mobilfunknetzes und zumindest eine Datenbank (13) für Nutzerinformationen des Nutzers des Mobilfunknetzes aufweist und das Speichermittel (121) für das zumindest eine Zusatzkonto eine Schnittstelle mit der Datenbank (13) aufweist.

13. System nach einem der Ansprüche 11 oder 12, **dadurch gekennzeichnet, dass** das Speichermittel (121) für zumindest ein Zusatzkonto eine Schnittstelle zu dem Speichermittel für das zumindest eine Grundkonto (120) aufweist.

## Claims

1. Method for usage of a communication connection in a mobile radio network from a mobile terminal (10), wherein in context with the usage of the communication connection a central management unit (11) checks at least one piece of user information, **characterized in that** during the examination of the at least one piece of user information, the account or the accounts for usage units which are assigned to the user, are checked, wherein in a base account and a supplemental account for a user usage units are managed, which have the same measurement for the base account and the supplemental account, which is a management measurement which is usage-independent, and upon determining of the presence of a supplemental account for a base account for the user, at least one usage condition for the usage of the usage units of the supplemental account is checked, wherein in the supplemental account each usage unit is assigned to at least one usage condition and at least one usage condition is the usage type of the usage of the communication connection, and upon detection of compliance with all usage conditions for the usage of the usage units of the supplemental account, the usage of the communication connection is allowed und a number of usage units corresponding to the usage is deducted from the supplemental account.

2. Method according to claim 1, **characterized in that** the number of usage units which corresponds to the usage is determined by query from a data base (13), where user information is stored, and that for the determination of the number of usage units rules are being used, which are stored for the user in the data base (13) with respect to the base account.

3. Method according to anyone of claims 1 or 2, **characterized in that** upon detection of non-compliance of at least one of the usage conditions for the usage of the usage units of the supplemental account, an examination of the compliance with the usage conditions for the usage of the usage units of the base account is carried out, wherein the usage conditions for the usage of the usage units of the base account are preferably stored in a data base (13) with user information for the user and are queried from this data base.

4. Method according to anyone of claims 1 to 3, **characterized in that** the examination of the compliance with the usage conditions for the usage of the usage units of the supplemental account is carried out by comparison with entries in the supplemental account.

5. Method according to anyone of claims 1 to 4, **characterized in that** the usage conditions are time conditions and/or a minimal quantity of usage units in the supplemental account or the base account.

6. Method according to anyone of claims 4 or 5, **characterized in that** the examination of the compliance of the usage conditions is carried out by checking the exceeding of a threshold value.

7. Method according to anyone of claims 1 to 6, **characterized in that** the supplemental account is divided into groups of usage units and at least one usage condition is assigned to each group.

8. Method according to claim 7, **characterized in that** upon detection of the non-compliance with at least one usage condition of a first group of the usage units of the supplemental account, the presence and the compliance with the usage conditions of a second group of the supplemental account is checked before an examination of the compliance of the usage conditions for the usage of the usage units of the base account is carried out.

9. Method according to anyone of claims 1 to 8, **characterized in that** one of the usage conditions of the usage units of the supplemental account is, that the usage units cannot be transferred to the base account.

10. Method according to anyone of claims 1 to 9, **characterized in that** it comprises at least the following steps:
- checking the presence of an supplemental account for a base account for the user, who is requesting the usage;
- examining the usage condition of the usage type for the supplemental account,
- querying the rules for the user for the base account from a data base, where the user information is stored,
- examining the number of usage units on the supplemental account and comparison with the usage units for the requested usage of the communication connection, which according to the rules for the user for the base account are required, and
- examining the time usage conditions of the usage units of the supplemental account and comparison with the current time conditions.

11. System for usage of a communication connection in a mobile radio network from a mobile terminal (10), which comprises at least one central management unit (11) and at least one mobile terminal (10), **characterized in that** the system is designed for carrying out a method according to anyone of claims 1 to 10.

12. System according to claim 11, **characterized in that** the system has at least one storage unit (12) with at least one storage means (120) for at least one base account ant at least one storage means (121) for at least one supplemental account of a user of the mobile radio network and at least one data base (13) for user information of the user of the mobile radio network and the storage means (121) for the at least one supplemental account has an interface with the data base (13).

13. System according to anyone of claims 11 or 12, **characterized in that** the storage means (121) for at least one supplemental account has an interface to the storage means for the at least one base account (120).

## Revendications

1. Procédé pour utiliser une liaison de communication dans un réseau de téléphonie mobile d'un terminal (10) mobile, dans lequel dans le cadre de l'utilisation de la liaison de communication, un service administratif (11) central vérifie au moins une information d'utilisateur, **caractérisé en ce que** lors de la vérification de l'au moins une information d'utilisateur, le ou les comptes associés à l'utilisateur pour des unités d'utilisation sont vérifiés, dans lequel sont administrées, dans un compte de base et dans un compte additionnel pour un utilisateur, des unités d'utilisation, qui présentent, pour le compte de base et pour le compte additionnel, la même taille, qui représente une taille à administrer indépendante de l'utilisation, et dans le cas de la présence avérée d'un compte additionnel par rapport à un compte de base pour l'utilisateur, au moins une condition d'utilisation pour l'utilisation des unités d'utilisation du compte additionnel est vérifiée, dans lequel au moins une condition d'utilisation est associée à chaque unité d'utilisation dans le compte additionnel et au moins une condition d'utilisation représente le mode d'utilisation de l'utilisation de la liaison de communication, et en cas de respect avéré de toutes les conditions d'utilisation pour l'utilisation des unités d'utilisation du compte additionnel, l'utilisation de la liaison de communication est autorisée et un nombre, correspondant à l'utilisation, d'unités d'utilisation est retiré du compte additionnel.

2. Procédé selon la revendication 1, **caractérisé en ce que** le nombre correspondant à l'utilisation d'unités d'utilisation est déterminé en consultant une base de données (13), dans laquelle des informations d'utilisateurs sont mémorisées, et **en ce que** sont utilisées, pour la détermination du nombre des unités d'utilisation, des règles, qui sont mémorisées pour l'utilisateur dans la base de données (13) par rapport au compte de base.

3. Procédé selon l'une quelconque des revendications 1 ou 2, **caractérisé en ce que** dans le cas du non-respect avéré au moins d'une des conditions d'utilisation pour l'utilisation des unités d'utilisation du compte additionnel, une vérification du respect des conditions d'utilisation pour l'utilisation des unités d'utilisation du compte de base est effectuée, dans lequel les conditions d'utilisation pour l'utilisation des unités d'utilisation du compte de base sont mémorisées de préférence dans une base de données (13) comprenant des informations d'utilisateur pour l'utilisateur et sont consultées par cette dernière.

4. Procédé selon l'une quelconque des revendications 1 à 3, **caractérisé en ce que** la vérification du respect des conditions d'utilisation pour l'utilisation des unités d'utilisation du compte additionnel est effectuée par la comparaison avec des entrées dans le compte additionnel.

5. Procédé selon l'une quelconque des revendications 1 à 4, **caractérisé en ce que** les conditions d'utilisation constituent des conditions en matière de durée et/ou une quantité minimale d'unités d'utilisation dans le compte additionnel ou dans le compte de base.

6. Procédé selon l'une quelconque des revendications 4 ou 5, **caractérisé en ce que** la vérification du respect des conditions d'utilisation est effectuée en vérifiant le dépassement d'une valeur de seuil.

7. Procédé selon l'une quelconque des revendications 1 à 6, **caractérisé en ce que** le compte additionnel est divisé en groupes d'unités d'utilisation, et **en ce qu'**au moins une condition d'utilisation est associée à chaque groupe.

8. Procédé selon la revendication 7, **caractérisé en ce qu'**en cas de non-respect avéré d'au moins une condition d'utilisation d'un premier groupe des unités d'utilisation du compte additionnel, la présence et le respect des conditions d'utilisation d'un deuxième groupe du compte additionnel sont vérifiés avant d'effectuer une vérification du respect des conditions d'utilisation pour l'utilisation des unités d'utilisation du compte de base.

9. Procédé selon l'une quelconque des revendications 1 à 8, **caractérisé en ce qu'**une des conditions d'utilisation des unités d'utilisation du compte additionnel est que les unités d'utilisation ne peuvent pas être transférées sur le compte de base.

10. Procédé selon l'une quelconque des revendications 1 à 9, **caractérisé en ce que** ledit procédé comprend au moins les étapes suivantes consistant à :
- vérifier la présence d'un compte additionnel par rapport à un compte de base pour l'utilisateur, qui demande l'utilisation ;
- vérifier la condition d'utilisation du mode d'utilisation pour le compte additionnel ;
- consulter les règles pour l'utilisateur pour le compte de base dans une base de données, dans laquelle des informations d'utilisateur sont mémorisées ;
- vérifier le nombre des unités d'utilisation sur le compte additionnel et comparer au nombre des unités d'utilisation requises selon les règles pour l'utilisateur pour le compte de base, pour l'utilisation demandée de la liaison de communication ; et
- vérifier les conditions d'utilisation en termes de temps des unités d'utilisation du compte additionnel et comparer aux conditions instantanées en termes de temps.

11. Système pour utiliser une liaison de communication dans un réseau de téléphonie mobile par un terminal (10) mobile, qui comprend au moins un service administratif (11) central et au moins un terminal (10) mobile, **caractérisé en ce que** le système est configuré pour la mise en oeuvre d'un procédé selon l'une quelconque des revendications 1 à 10.

12. Système selon la revendication 11, **caractérisé en ce que** le système présente au moins une unité de mémorisation (12) comprenant au moins un moyen de mémorisation (120) pour au moins un compte de base et au moins un moyen de mémorisation (121) pour au moins un compte additionnel d'un utilisateur du réseau de téléphonie mobile et au moins une base de données (13) pour des informations d'utilisateur de l'utilisateur du réseau de téléphonie mobile, et **en ce que** le moyen de mémorisation (121) pour l'au moins un compte additionnel présente une interface avec la base de données (13).

13. Système selon l'une quelconque des revendications 11 ou 12, **caractérisé en ce que** le moyen de mémorisation (121) pour au moins un compte additionnel présente une interface avec le moyen de mémorisation pour l'au moins un compte de base (120).
